(19) **Europäisches Patentamt**

**European Patent Office**

**Office européen des brevets**

(11) **EP 0 952 439 A1**

(12) # EUROPEAN PATENT APPLICATION

(43) Date of publication:
**27.10.1999 Bulletin 1999/43**

(51) Int. Cl.[6]: **G01M 3/10**

(21) Application number: **98201282.5**

(22) Date of filing: **21.04.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**THE PROCTER & GAMBLE COMPANY**
**Cincinnati, Ohio 45202 (US)**

(72) Inventor:
**Etesse, Patrick Jean-François**
**1040 Brussel (BE)**

(74) Representative:
**Engisch, Gautier et al**
**BVBA Procter & Gamble Europe SPRL,**
**Temselaan 100**
**1853 Strombeek-Bever (BE)**

(54) **An improved water bath test for aerosols**

(57)    A process for manufacturing a filled aerosol container, the aerosol container containing a propellant and a product, the propellant being soluble in the product, the propellant being non liquefiable, the process comprising a water bath step, the water bath step consisting in immersing the filled aerosol container in water. The water bath test is such that the aerosol container has an internal pressure above its equilibrium pressure prior to and while being immersed in water, in order to detect leakage more rapidly.

EP 0 952 439 A1

## Description

### Technical field

The invention relates to a process for testing aerosol containers for leakage in a water bath.

### Background of the invention

Aerosol containers are very widely used, for example in the consumer products field. Such containers raise specific safety issues due to the fact that their content is maintained at a pressure well above the atmospheric pressure. Therefore, such containers are undergoing tests during manufacture in order to detect defaults such as leakage. Leakage is generally tested by passing the container in a water bath, so that a leak will be rendered evident by bubbling.

The containers tested are filled containers which are ready for market. Such containers are containing a product to be dispensed by the container together with a propellant. The product is generally liquid within the container. The characteristic of propellants is that they are gaseous at ambient temperature and at atmospheric pressure, so that they could be compressed to higher pressures for producing the pressure gradient which will allow to expel the product out of the can. The propellant used may be of different types. The type which is most widely used is the liquefiable propellant. The liquefiable propellant is such that it will have a liquid phase at the pressure existing inside the can. Consequently, liquefiable propellants have a liquefaction pressure between the atmospheric pressure and the inner can pressure. The advantage of such propellants is that they can be inserted within the can in relatively large quantities as they are liquefied, so that there will be a sufficient amount of propellant to maintain the pressure in the aerosol because the propellant will partially vaporise if the pressure drops, thus maintaining the pressure. Indeed, the liquid part of the propellant is acting as a reservoir for maintaining the pressure inside the can, so that all of the product can be expelled. Such propellant include propane, or CFC's, which are not used anymore for environmental reasons. There is also propellants which are not liquefiable, such as air. By not liquefiable, it is meant that they are not liquefiable at pressures such as the pressure existing in an aerosol can. Indeed, air can be liquefied, but liquefaction requires a pressure well above the pressure of any current aerosol can. Such propellants have the advantage that they can be neutral, to the difference of propane, for example, which is flammable. However, as no liquefaction occurs within the aerosol container, there is no pressure reservoir, so that the pressure within the can will not be maintained if part of the propellant is expelled. Consequently, using such a propellant, it often occurs that the product cannot be completely expelled. Indeed, there might be propellant losses such that the pressure within the container will be substantially equal to the atmospheric pressure, so that the aerosol will not function. This would happen much more rarely when using liquefiable aerosols as the liquid phase will act as a reservoir for maintaining a higher pressure. However, in some cases there is a possibility for having a pressure reservoir while using a non liquefiable propellant. Indeed, some non liquefiable propellant have the property to dissolve in the product. This is often the case when using $CO_2$ or $N_2O$ as a propellant. In this case, the dissolved part of the propellant will constitute a reservoir in case of pressure drop. Such a reservoir is not comparable to a liquid phase reservoir, but still has a significant effect in preventing pressure drop.

The present invention concerns a process for manufacturing a filled aerosol container, the aerosol container containing a propellant and a product, the propellant being soluble in the product, the propellant being non liquefiable, the process comprising a water bath step, the water bath test consisting in immersing the filled aerosol container in water.

Among the advantage of a water bath test is that bubbles will appear straight away in case of leakage. Furthermore, such a test can be made on each can manufactured as it simply requires the immersion of the can.

While having these and other advantages, water bath tests have disadvantages. Indeed, in order for the test to be reliable, the aerosol container should have an inner pressure during the test above the normal pressure, in order to make leakage more obvious. This pressure higher than normal pressure is created by using hot water for the water bath test. Indeed the increase in temperature will produce an increase in pressure due to a thermodynamic effect, as an equilibrium pressure is corresponding to each temperature to which the can is submitted. However, the increase in pressure will not be instantaneous, as the equilibrium pressure will not be reached straight away. This means that the pressure during the water bath will not be the equilibrium pressure at the water temperature as it is desired, unless the can is left in the water for long enough. This results either in a significant delay during production or in a non fully satisfactory leakage test and in extreme cases may even result in damages to the product or to the package.

The invention seeks to provide a process of the above mentioned kind which will allow to conduct a fully satisfactory leakage test while minimising the time needed for conducting it.

### Summary of the invention

In accordance with the invention, this object is accomplished in a process of the above kind in that the aerosol container has an internal pressure above its equilibrium pressure prior to and while being immersed in water.

## Detailed description of the invention

The invention relates to a process for manufacturing a filled aerosol container. By an aerosol container, it is meant that the container is a pressurised container. Pressurised containers are usually composed of three basic elements being a can, a mounting cup and sealing means. The can may be an aluminium can, a steel can or a can made out of a plastic material.

Aluminium cans are widely used in pressurised containers. Such cans have a basic shape, dimensions and method of manufacture which have become relatively standardised. These cans are usually formed by extrusion or cold drawing processes as described for example in US-A-4 441 354, processes during which a cylindrical unitary hollow aluminium body is formed together with a circular neck which is defined by a curled portion of the can. The circular neck is designed for co-operating with the mounting cup which will be usually crimped onto the neck, thus joining these two elements together, the junction being made thanks to the third element of the container, the sealing means. Various improvements of these three elements taken separately or in combination have been proposed. Numerous sealing or crimping methods have been proposed for improving the junction between the circular neck and the mounting cup. Usually, these improvements imply a modification of the sealing means between the circular neck of the can and the mounting valve. The sealing means may be a grommet or polymeric layer as described in WO-A-81/01695.

Cans made out of steel, preferably tin plated steel, are normally comprising three parts: a bottom base, a top dome and a side cylinder. These three components are cooperating in such a manner that the base and the dome are positioned onto the extremities of the side cylinder. The side cylinder is generally made from a thin steel sheet which is welded to form the desired cylinder. The base has normally no opening, apart from safety high pressure release mechanisms. However, the dome is the part which usually comprises the curled portion. The curled portion is obtained by machining the sheet of steel from which the dome is made. The whole curled portion has substantially a torus shape defined by the revolution of an essentially circular shape about the axis of the cylindrical can. The essentially circular shape, which corresponds to a section of the curled portion along a plane comprising the axis of the cylindrical can, is in this case comparable to the extremity of a question mark sign, the bottom part of the question mark being part of the rest of the dome, and the other part, which is at the extremity of the semi-circle, being turned away from the central axis which is the axis of the cylindrical container.

Cans made out of aluminium have a structure which is different in that they are normally composed of a unitary mono-block part which is machined using processes such as extrusion or cold drawing whereby a flat piece of metal is formed into a hollow cylindrical body. This means that there is no need for assembling a base, a dome and sides. However, such aluminium cans are normally also provided with a curled portion. The curled portion is having the same characteristics as the curled portion of steel cans as described above.

Machining such a curled portion requires special procedures, but it is providing a smooth and relatively solid structure which can be used for connecting the can with a mounting cup. In a normal process for producing an aerosol container, the can will be provided with a mounting cup. The mounting cup is a separated part which usually comprises a valve, and which cooperates with the curled portion of the can to seal it. Indeed, the aim is to obtain a sealed container of which the only output is the valve situated onto the mounting cup. In order to seal efficiently the container, the mounting cup normally comprises a double skirt. The double skirt normally co-operates with the curled portion of the can in the following manner. The curled portion of the can is inserted between the inner skirt and the outer skirt forming the double skirt. Once this is done, the mounting cap is hold tight against the can, so that the top part of the curled portion is pressing against a portion of the mounting cup which is linking the inner and the outer skirts. The inner skirt, the linking portion and the outer skirt have a section which can be compared with an inverted "U", in which the curled portion is positioned. Once positioned, the mounting cup is fixed by crimping. Crimping consists in using a crimping head to press against the inner skirt in a radial direction from the centre of the cylindrical can to the side of the cylindrical can. In this manner, the inner skirt is bent so as to come in contact with the inner side of the can, thus forming a metal-metal contact region and consequently sealing the mounting cup onto the can.

In order to obtain a good seal most of the containers also comprise sealing means. These sealing means are provided between the curled portion of the can and the linking portion of the double skirt of the mounting cup. Various sealing means are known from the art. For example, a polymeric layer may be provided onto the inner side of the mounting cup. In most of the cases, the sealing means comprises a grommet which is placed between the curled portion of the can and the linking portion of the double skirt of the mounting cup. The sealing means is normally pre-compressed when the mounting cup is being held tight against the can. Pre-compression is preferably obtained by applying a force onto the mounting cup in the direction of the axis of the container. Crimping occurs as described above.

Even with such a structure, such containers may be subject to leakage due to defaults or imperfections. Leakage is more likely to occur if the product contains surfactants, indeed the surfactants will tend to wet the sealing region of the container, thus favouring leakage. Leakage is also more likely to occur when the container is a higher pressure container. Such pressures are equilibrium pressures at the temperature considered. The equilibrium pressure is for example composed of a partial pressure due to the propellant gas and to the partial pressure due to the product contained which is in the gaseous form. The partial pressures are adding up to create the equilibrium pressure. By equilibrium it is meant that the pressure and the temperature are not evolving in time once the equilibrium is reached. It is a thermodynamic equilibrium. In particular, high pressures are reached when using a gaseous propellant which can be dissolved in the product to be dispensed, examples of such gaseous propellants including $CO_2$ and $N_2O$, propellants which are particularly used in combination with a product which is a foaming composition contained in the container.

Such containers are containing a product and a propellant. The product is normally the composition which should be dispensed by the aerosol container, whereas the propellant has the function of maintaining a pressure within the container higher than the atmospheric pressure when the can is filled. The product and the propellant are normally filled within the container separately. Usually the product is filled in a liquid form directly in the can prior to crimping, after which the mounting cup is crimped onto the can. Up to this moment, the pressure inside the can is the ambient pressure, as no pressurisation occurred. Pressurisation normally occurs during propellant filling. Propellant filling usually takes place once the container is filled with product and sealed by crimping. At this stage, the can cannot be filled directly as it is sealed by the mounting cup, so that propellant is normally filled through the valve while depressing it, or by filling under the mounting cup for example. The amount of propellant inserted is such that the equilibrium pressure in the can is as desired. In the case of a liquefiable propellant, this pressure is obtained straight away as the reservoir of propellant which is not in the gas head is liquid. In the case of a non liquefiable and non dissolvable propellant, this pressure is also reached straight away as the gas which is filled in is filled in exactly in the quantity desired and is forming the gas head straight away. However, this is different in the case of non liquefiable dissolvable propellants. Indeed, dissolution is a physical and chemical phenomenon which is time consuming, so that the equilibrium pressure will be reached only once the dissolution occurred. Prior to this, there is more gas in the gas head than in the equilibrium situation. Consequently, during propellant filling, the pressure within the container would tend to be higher than expected. For example, if we neglect the contribution to pressure made by the vapour of the product and if we consider only the propellant contribution, if at equilibrium a container contains 2 g of $CO_2$ in the gas head producing an equilibrium pressure of 8 bar and 6 g of $CO_2$ dissolved in the product, then the container would contain 8 g of $CO_2$ in the gas head prior to dissolution, so that the pressure would reach about 32 bar. This example is aimed at facilitating the understanding of the phenomenon and is consequently not completely realistic. Because such a pressure should not be reached for avoiding risks of explosion, the can is normally shaken during filling, so that dissolution is favoured and occurs straight away thanks to the gas and liquid phases mixing created by the shaking. In normal processes, the can is shaken sufficiently for the equilibrium to be kept during filling, so that dissolution becomes almost instantaneous during filling while shaking in a traditional filling with non liquefiable dissolvable propellant procedure.

Dissolution is a chemical and physical phenomenon. Indeed, the propellant will dissolve more quickly in the product if it has a higher chemical affinity with the product, the affinity being due for example to weak bounding between propellant molecules and product molecules. Furthermore the dissolution is a physical phenomenon because it depends on diffusion of the propellant molecules within the product. These phenomena are taking place up to equilibrium of the pressure.

It should be noted that the pressure equilibrium is dependant on the temperature. This can be understood thanks to the thermodynamic equation of a perfect gas: $PV=nRT$, whereby P is the pressure, V the volume, n the number of moles, R the universal gas constant and T the temperature of the system considered. Schematically, the gas head of an aerosol has a constant volume and a constant number of moles, so that a rise of T will involve a rise of P, these being equilibrium values. This is schematic because other phenomena take place. For example, dissolution of gases in liquids is usually favoured at lower temperatures, so that a rise in temperature would not be at constant number of moles, but n would increase in the gas head. Hence the increase of P with T is of more than what is given by the perfect gas law. Furthermore, at least V changes after each use of aerosol. However, this equation allows to have a basic understanding of the mechanisms involved. In this specification the equilibrium pressure is the equilibrium pressure at ambient temperature, unless stated as being at another temperature.

Once the can has been filled, it should be tested for leaks. In order to accomplish this in good condition and to have a test allowing to ensure consumer safety, the container is inserted in a water bath, in conditions such that its pressure is above its equilibrium pressure prior to and while being immersed in water. Usually, that pressure is set to correspond to the equilibrium pressure of the filled container at an equilibrium temperature corresponding to an extreme situation. This means that according to the invention, the container will be inserted in the water bath in a non-equilibrium state whereby the non-equilibrium pressure at insertion would preferably be at least equal to the equilibrium pressure which would be reached in extreme conditions of use of the container. Consequently, the filled container can be reliably tested in order to ensure consumer safety.

In a normal water bath, the can is being immersed in water at its equilibrium pressure, after what the pressure builds up slowly up to ideally reaching the equilibrium pressure at the temperature of the water bath. However, this needs time, and the pressure desired may not have been reached as the can is taken out of the water bath, thus involving risks for the consumer safety. In order to minimise these risks, the water bath of the invention is such that the container is already at a pressure above its equilibrium pressure prior to and while being immersed in water.

Actually, the fact that it is needed to shake the can to solubilize the gas into the liquid also applies to the reverse -de-solubilization- process. For example, for very viscous products (> 300 mPas.s), experiments have shown that when a can at an ambient equilibrium state -both P,T at their ambient values- is immersed in a heated water bath and is left immersed without shaking, it takes several minutes for the temperature to reach a uniform temperature across the can contents but sometimes more than 24 hours for the can contents to reach their new equilibrium pressure. Hence, with such particular viscous products, testing for leakage using temperature as the water bath control process parameter would require leaving the cans for more than 24 hours immersed in hot water which would cause irreversible damage to various components such as the can printed artwork or the product composition itself. Furthermore, relatively long immersion at temperature higher than ambient may be the cause of irreversible damages, in particular for plastic cans.

The container is at a pressure above its equilibrium pressure prior to being immersed in water. By "above its equilibrium pressure", it is meant that the pressure in the container is not the equilibrium pressure but is more than the equilibrium pressure prior to immersion. This can be obtained by having a container in which dissolution did not occur completely. In the example above, it means that the pressure prior to and during immersion is between 8 and 32 bar. The pressure for immersion in the water bath can be tuned by shaking the can more or less during the filling process. Such a pressure can be set by acting on the shaking of the can during filling. Indeed, the can can be more or less shaken, so as to ensure that the pressure within the can at immersion is as desired. In order to ensure this, it is preferred to measure the pressure in a pressure control test consisting in measuring the internal pressure prior to immersion. It should be taken account of the fact that the pressure in the container will tend to reach the equilibrium pressure if the container is left for too long before being inserted in the water bath. Indeed, the desired pressure at insertion will be obtained by shaking the can in the appropriate manner, and by having an appropriate time for transfer of the filled container to the water bath.

By "prior to and while being immersed" it is meant during the action of immersion ("being immersed"). Indeed, once it has been immersed, the container may have a pressure rise or a pressure diminution. Indeed, once immersed, it has a given pressure, but this pressure will change according to the temperature of the water bath. Preferably, the temperature of the water bath will be such that the pressure of immersion will be at least maintained, so that testing is more reliable. Indeed, if the temperature of the water bath is such that the equilibrium pressure corresponding to this temperature is lower than the pressure during immersion, the pressure will tend to diminish during the water bath. This should be controlled in order to obtain a reliable testing. Preferably, the pressure prior to and while being immersed is of at least 1.3 times the equilibrium pressure at ambient temperature, more preferably 1.4 times and most preferably 1.5 times.

Preferably, the propellant at equilibrium pressure at ambient temperature is divided into less than 25 % by weight in the gaseous form and more than 75 % by weight in the dissolved form, and the propellant in the aerosol can at the internal pressure prior to and while being immersed in water is divided into more than 30 % by weight in the gaseous form and less than 70 % by weight in the dissolved form, so that pressure in the container is higher than equilibrium pressure prior to and while being immersed in water as more propellant is in the gaseous form in the gas head.

In a particular embodiment of the invention, the invention is applied to a 250 mL unitary aluminium can with a 1 inch opening, i.e. a curled portion providing an opening of about 2.54 cm. The can and the curled portion are formed using backward extrusion or deep drawing and stretching. Forming of such a can is described for example in US-A-4 441 354. The product contained in the container is a foaming composition comprising 40 % by weight of surfactants. The propellant is $CO_2$, so that the container at equilibrium in ambient temperature (25°C) will contain 7g of $CO_2$ dissolved in the liquid phase and 2.5g of $CO_2$ in the gas phase. If the can temperature is elevated to higher temperatures during use, a new equilibrium could eventually be reached where 6.5g of $CO_2$ will remain in the liquid phase and 3 g of $CO_2$ will end up in the gas phase, resulting in an equilibrium pressure of 11.5 bar, so that the container should be tested at such a pressure. Therefore, the container is filled in such a manner that 3.5 g of $CO_2$ are in the gas head and only 6 g are dissolved. When 3.5g of $CO_2$ are present in the head-space, the pressure inside the can at 25°C is 11.5 bar. It is not an equilibrium, this is why there is 3.5g of $CO_2$ and not only 3g as in the 50 °C temperature equilibrium situation. Indeed, the vapour from the product and the thermal agitation of the gas molecules do not participate to the pressure in the same manner in both cases, i.e. at higher temperature equilibrium or not. Of course the total amount of $CO_2$ is of 9.5 g in all cases above. This means that the can will have an equilibrium pressure at 25°C of 8 bar and will be immersed in the water bath at 11.5 bar. Once out of the water bath and left for a certain time at ambient temperature, the container will reach the equilibrium pressure of 8 bar. It should be noted that the inner pressure of the can should not be such that the can could explode. As the can of this embodiment has a minimal burst pressure of 21.6 bar, it is recommended to test the container at a pressure which is not above 56 % of the minimal burst pressure.

**Claims**

1. A process for manufacturing a filled aerosol container, the aerosol container containing a propellant and a product, the propellant being soluble in the product, the propellant being non liquefiable, the process comprising a water bath step, the water bath step consisting in immersing the filled aerosol container in water, characterised in that the aerosol container has an internal pressure above its equilibrium pressure prior to and while being immersed in water.

2. The process for manufacturing a filled aerosol container according to claim 1, whereby the process further comprises a filling step, the filling step consisting in filling the container, whereby the filling step occurs prior to the water bath test, and whereby the pressure within the filled container is decreasing between the end of the filling test up to being immersed in the water.

3. The process according to claim 1, whereby the propellant is comprising $CO_2$, $N_2O$, $N_2$ or air, separately or in a mixture.

4. The process according to claim 1, whereby the process further comprises a pressure control step consisting in measuring the internal pressure of the container prior to immersion.

5. The process according to claim 1, whereby the internal pressure prior to and while being immersed in water is of at least 1.3 times its equilibrium pressure.

6. A process according to claim 1, whereby the equilibrium pressure at ambient temperature is of 8 bar.

7. A process according to claim 1, whereby the product is a liquid foaming composition.

8. A process according to claim 1, whereby the product is containing surfactants.

9. A process according to claim 1, whereby the aerosol container is comprising a unitary aluminum can.

10. The process according to claim 1, whereby the propellant at equilibrium pressure at ambient temperature is divided into less than 25 % by weight in the gaseous form and more than 75 % by weight in the dissolved form, and the propellant in the aerosol can at the internal pressure prior to and while being immersed in water is divided into more than 30 % by weight in the gaseous form and less than 70 % by weight in the dissolved form.

## EUROPEAN SEARCH REPORT

**European Patent Office**

Application Number

EP 98 20 1282

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN<br>vol. 008, no. 188 (P-297), 29 August 1984<br>& JP 59 077330 A (MITSUBISHI DENKI KK), 2 May 1984<br>* abstract *<br>--- | 1 | G01M3/10 |
| A | EP 0 540 853 A (CC KONTROLLANLAGEN GMBH) 12 May 1993<br>* claim 1 *<br>----- | 1 | |
| | | | **TECHNICAL FIELDS SEARCHED (Int.Cl.6)**<br><br>G01M |

The present search report has been drawn up for all claims

| Place of search | Date of completion of the search | Examiner |
|---|---|---|
| THE HAGUE | 25 August 1998 | Zafiropoulos, N |

**ANNEX TO THE EUROPEAN SEARCH REPORT
ON EUROPEAN PATENT APPLICATION NO.**

EP 98 20 1282

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-1998

| Patent document cited in search report | Publication date | Patent family member(s) | Publication date |
|---|---|---|---|
| EP 0540853 A | 12-05-1993 | DE 4136472 A | 13-05-1993 |
| | | AT 131612 T | 15-12-1995 |
| | | ES 2081013 T | 16-02-1996 |

EPO FORM P0459

For more details about this annex : see Official Journal of the European Patent Office, No. 12/82